# EUROPÄISCHE PATENTSCHRIFT

(11) **EP 1 698 571 B1**
(45) Veröffentlichungstag und Bekanntmachung des Hinweises auf die Patenterteilung: **14.05.2008**
(21) Anmeldenummer: 06002400.7
(22) Anmeldetag: 07.02.2006
(51) Int. Cl.: B65G 1/04

(54) **Handhabungsvorrichtung für Langgut**
Handling device for elongated articles
Dispositif de manutention d'objets longitudinaux

(30) Priorität: 03.03.2005 DE 102005009732
(43) Veröffentlichungstag der Anmeldung: 06.09.2006
(73) Patentinhaber: KEURO Besitz GmbH & Co. EDV-Dienstleistungs KG, 77855 Achern (DE)
(72) Erfinder: Dipl. -Ing. Armin Stolzer, 55283 Nierstein (DE); Dipl. -Ing. (FH) Valentin Meier, 77767 Appenweier (DE)
(74) Vertreter: Blumenröhr, Dietrich

(56) Entgegenhaltungen:
- US-A- 4 708 566
- US-A- 5 507 613

## Beschreibung

Die Erfindung betrifft eine Handhabungsvorrichtung für Langgut mit den Merkmalen des Oberbegriffs des Anspruchs 1.

Im Stand der Technik ist beispielsweise aus der US-A-4,708,566 eine Handhabungsvorrichtung bekannt in Form eines Kranes, wobei der Kran Vertikalführungen aufweist sowie eine Lasttraverse. Die Lasttraverse weist auf der einen Seite Lastaufnahmemittel in Form von Zinken auf und ist für eine Materialentnahme bzw. -einlagerung in Regalfächer einfahrbar.

Auch ist aus der DE-A-43 35 334 eine Handhabungsvorrichtung in Form einer Wechselvorrichtung bekannt, die eine Lasttraverse mit sich in Horizontalrichtung erstreckenden Gabelzinken aufweist. Mit Hilfe dieser Gabelzinken ist es möglich, in horizontalen Regalfächern befindliches stangenförmiges Material zu vereinzeln und/oder vereinzelt zu transportieren. Indem sich die Gabelzinken beidseits der Lasttraverse erstrecken, ist diese Handhabungsvorrichtung dazu in der Lage, beidseits eines für die Handhabungsvorrichtung belassenen Ganges positionierte Regale anzufahren, um dann beispielsweise das aus diesen Regalen ausgelagerte stangenförmige Material einer weiteren Verarbeitung in einem Sägezentrum (beispielsweise bestehend aus einer Kaltkreissäge) zuzuführen.

Die bekannte Handhabungsvorrichtung ist sicherlich ausgereift und arbeitet optimal, sofern das stangenförmige Material regelmäßige Querschnitte aufweist und für ein Lagern in horizontalen Lagerfächern geeignet ist.

Hiervon ausgehend liegt der vorliegenden Erfindung die Aufgabe zugrunde, eine Handhabungsvorrichtung der eingangs genannten Art mit erweiterten Anwendungsmöglichkeiten und einem verbesserten Transportverhalten zur Verfügung zu stellen.

Diese Aufgabe wird erfindungsgemäß bei einer Handhabungsvorrichtung mit den Merkmalen des Oberbegriffs des Anspruchs 1 durch die Merkmale des kennzeichnenden Teils des Anspruchs 1 gelöst.

Hierdurch ergibt sich der Vorteil, dass die einzeln und getrennt voneinander ansteuerbaren und betätigbaren Greiferzinkenpaare das handzuhabende stangenförmige Material während des Transports optimal form- oder kraftschlüssig umgreifen und bevorzugterweise klemmen können (weshalb in der Folge überwiegend nur von "Klemmen" gesprochen wird, ohne dass damit eine Einschränkung verbunden sein soll) und so weitaus schnellere Fahrbewegungen realisiert werden können, als wenn das Langgut nur lose auf den horizontalen Gabelzinken aufliegt. Vor allem aber ist es in besonders vorteilhafter Weise möglich, das Langgut nicht nur aus in horizontaler Richtung offenen bzw. sich in horizontaler Richtung erstreckenden Regalfächern zu entnehmen bzw. dorthin einzulagern; sondern dieselbe Handhabungsvorrichtung mit derselben Lasttraverse und denselben Lastaufnahmemitteln kann durch ein Verschwenken um die horizontale Achse so eingestellt werden, dass das Langgut auch in sich in vertikaler Richtung erstreckende Regalfächer eingelagert bzw. von diesen ausgelagert werden kann. Hierzu taucht die Lasttraverse mit den Greiferzinkenpaaren von oben nach unten in ein nach oben offenes Vertikalregalfach ein, bis es das handzuhabende Langgut seitlich überlappt, dann werden die Greiferzinkenpaare aufeinander zu bewegt unter Klemmen des Langguts, und anschließend kann das Langgut aus dem Vertikalfach entnommen und an eine andere Position transportiert werden, gegebenenfalls unter Durchführen einer horizontalen Schwenkbewegung, etwa wenn das transportierte Langgut in ein horizontales Lagerfach eingelagert werden soll.

Zwar ist aus der CH-A-668 955 bereits eine Handhabungsvorrichtung zum vertikalen Vereinzeln, also zum Handhaben von Langgut von oben bekannt, wobei die dort verwendete Lasttraverse ebenfalls mehrere Greiferzinkenpaare aufweist. Diese Greiferzinkenpaare haben jedoch eine fest vorgegebene vertikale Orientierung und ermöglichen lediglich ein Umlagern des Lagerguts in/aus von oben zugänglichen Lagerfächern, außerdem ist das Lagergut wegen der Vereinzelung auf symmetrische, vorzugsweise geschlossene Querschnitte und Profile beschränkt. Weder ist dort eine Kombination mit horizontalen Lastaufnahmemitteln offenbart, noch ist es bei dieser bekannten Lageranlage möglich, die Lastaufnahmemittel schwenkbar auszuführen. Folglich sind alle in diesem Stand der Technik beschriebenen Lagerfächer ausschließlich in Vertikalrichtung orientiert und von oben zugänglich.

Die vorliegende Erfindung erschöpft sich gegenüber der bekannten Traverse aber nicht nur dadurch, dass Lastaufnahmemittel für horizontale Lagerfächer vorgesehen werden; vielmehr vereint sie vertikale und horizontale Umlagervorgänge in derselben Lasttraverse, die um mindestens 90° um eine Horizontalachse schwenkbar angeordnet ist. Aufgrund der schwenkbaren Traverse können auch handelsübliche, seitlich offene Kassetten mit in horizontaler oder vertikaler Richtung orientierten Kragarmfächern, die fest oder variabel ausgebildet sein können, nachgerüstet werden. Die schwenkbare Lasttraverse kann dann Langgut sowohl in/aus Kassetten von oben als auch in/aus mit Kragarm versehenen Kassetten seitlich einlagern bzw. entnehmen. Hierzu sind die "Nachrüst-Kragarmfächer" zweckmäßigerweise über eine Steckverbindung an den Oberseiten der genannten handelsüblichen Kassetten in dort vorzusehenden Steckaufnahmen festlegbar.

Insgesamt handhabt somit die erfindungsgemäße Handhabungsvorrichtung das Langgut mit zumindest zwei translatorischen und einem rotatorischen Freiheitsgrad, wodurch sich nicht nur hinsichtlich der Lagermöglichkeiten (durch zusätzliche vertikale Lagerfläche), sondern auch hinsichtlich der Handhabungsgeschwindigkeit (durch ein gesichertes Transportieren der geklemmten stangenförmigen Gegenstände) eine deutliche Verbesserung gegenüber bekannten Handhabungsvorrichtungen ergibt.

Es ist in diesem Zusammenhang besonders zweckmäßig, wenn die Lastaufnahmemittel einen Schwenkbereich von zumindest 90° und insbesondere von 180° aufweisen, um nicht nur ein horizontales Umlagern in einer horizontalen Richtung und ein vertikales Umlagern zu ermöglichen, sondern um auch ein horizontales Umlagern in der anderen Horizontalrichtung und demgemäß beispielsweise bei einem Regalgang auf beiden Seiten des Regalgangs ein Einlagern in horizontale Regalfächer zu ermöglichen. Soll beispielsweise von der einen Seite des Regalgangs ein Langgut ausgelagert und in die gegenüberliegende Seite eingelagert werden, so könnte dies darin bestehen, dass die Lasttraverse mit den in Horizontalrichtung orientierten Greiferzinkenpaaren von oben in den Regalgang eintaucht, dann horizontal in das Regalfach vordringt, das stangenförmige Material ergreift, aus dem Regalfach wieder herausfährt, nach oben aus dem Regalgang verfährt, um dort eine Schwenkbewegung um 180° durchzuführen, woraufhin dann die Lasttraverse mit den in entgegengesetzter Richtung orientierten Greiferzinkenpaaren wieder in den Gang eintaucht und das Langgut in das gegenüberliegende Regalfach einlagert.

Was die Verschwenkbarkeit der Lastaufnahmemittel betrifft, so ist es zum einen möglich, dass die Lastaufnahmemittel schwenkbar an der Lasttraverse angeordnet sind. Es ist darüber hinaus aber auch möglich, dass die Lasttraverse selbst schwenkbar in der Handhabungsvorrichtung und insbesondere schwenkbar an einem in Vertikalrichtung verfahrbaren Hubschlitten angeordnet ist.

Ein weiterer Vorteil ergibt sich, wenn die Lasttraverse zwei- oder mehrfach geteilt ausgebildet ist, um beispielsweise kürzeres Langgut mit einer dem einen Teil der Lasttraverse entsprechenden Länge zu transportieren. Hierbei könnte der zweite Teil der Lasttraverse entweder ganz in entgegengesetzte Richtung weggeschwenkt werden; es würde aber auch schon reichen, wenn der zweite, inaktive Teil der Lasttraverse bzw. zumindest der untere Greiferzinken um einige Grad leicht nach unten verschwenkt würde, so dass bei einem Einfahren der Greiferzinken in ein Regalfach und einem anschließenden leichten Anheben die dem inaktiven Lasttraversenteil zugeordneten Greiferzinken so tief angeordnet wären, dass sie das dort eventuell vorhandene Material nicht mit anheben und demgemäß beim Herausfahren der Lasttraverse leer hinausfahren. Ein solches leichtes Verschwenken nach unten kann zweckmäßigerweise über einen Exzenterhub realisiert werden.

Durch dieses Aufteilen der Lasttraverse ist es möglich, kürzeres Stangenmaterial im selben Regal zueinander fluchtend axial hintereinander zu lagern und unabhängig voneinander handzuhaben.

In diesem Zusammenhang ist es natürlich sinnvoll, wenn die Lastaufnahmemittel der beiden Lasttraversenteile unabhängig voneinander betätigbar sind, also unabhängig voneinander die Greif- bzw. Klemmbewegung durchführen können, um beim Umlagern von kurzem Stangenmaterial nicht durch die nichtbeaufschlagten Greiferzinkenpaare unbeabsichtigt anderes Stangenmaterial zu beaufschlagen.

Um das Langgut sicher zu halten und auch vor Durchbiegungen beim Transport zu schützen und um des weiteren die Klemmkräfte auf viele Angriffsbereiche zu verteilen, empfiehlt es sich, dass die Lasttraverse eine Vielzahl an Lastaufnahmemitteln aufweisen kann, beispielsweise bei starren Stangen mindestens zwei, bei biegeweichen Stangen mehrere Greiferzinkenpaare aufweist.

Darüber hinaus lässt sich die Handhabungsgeschwindigkeit bei der erfindungsgemäßen Handhabungsvorrichtung dadurch noch weiter erhöhen, dass man die Greiferzinkenpaare so lang ausführt, dass ein Mehrfachhandhaben möglich ist, also mehrere stangenförmige Materialien gleichzeitig klemmt und ein- bzw. ausgelagert werden können.

Insgesamt ist es mit der erfindungsgemäßen Handhabungsvorrichtung beispielsweise möglich, mithilfe derselben Lasttraverse Einzelstäbe aus einlagigen in mehrlagige Regalfächer oder Kragarmkassetten bzw. umgekehrt umzulagern, Einzelstäbe für den Transport zu weiterverarbeitenden Vorrichtungen (insbesondere zu einer Sägemaschine) zu vereinzeln oder auch Einzel- und mehrere Stäbe zum Bilden von Langgutkommissionen zu vereinzeln.

Weitere Merkmale und Vorteile der vorliegenden Erfindung ergeben sich aus den Unteransprüchen und aus der nachfolgenden Beschreibung eines Ausführungsbeispiels; hierbei zeigen
- Figur 1: eine erfindungsgemäße Handhabungsvorrichtung in Vorderansicht;
- Figur 2: eine Lasttraverse einer erfindungsgemäßen Handhabungsvorrichtung in Vorderansicht in verschiedenen Schwenkpositionen a), b), c), d);
- Figur 3: die Lasttraverse der erfindungsgemäßen Handhabungsvorrichtung in Seitenansicht in zwei Phasen einer Greifbewegung;
- Figur 4: eine Lasttraverse beim Einlagern von stangenförmigem Material in eine Horizontalkragarmkassette von links, in zwei verschiedenen perspektivischen Vorderansichten a) und b);
- Figur 5: die Lasttraverse aus Figur 4 beim horizontalen Umlagern in eine Horizontalkragarmkassette von links, in zwei unterschiedlichen perspektivischen Vorderansichten a) und b);
- Figur 6: die Lasttraverse aus den Figuren 4 und 5 beim vertikalen Umlagern in zwei unterschiedlichen Vorderansichten a) und b); und
- Figur 7: ein nachrüstbares Kragarmfach gemäß einem Aspekt der Erfindung.

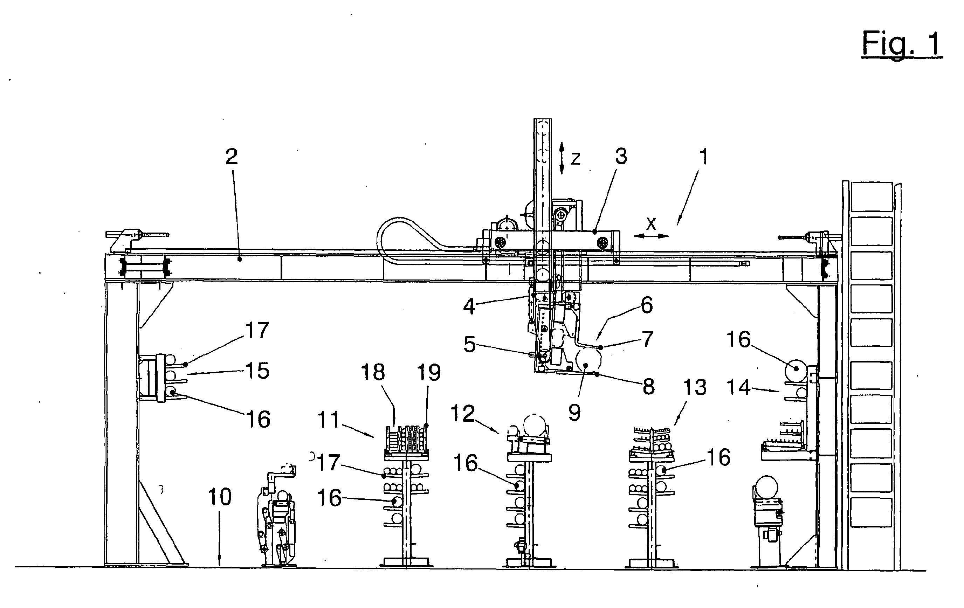

Figur 1 zeigt eine Handhabungsvorrichtung 1 mit einem auf einer sich in Horizontalrichtung erstreckenden Portaltraverse 2 verfahrbaren Horizontalschlitten 3 und einem an dem Horizontalschlitten 3 in Vertikalrichtung verfahrbaren Hubschlitten 4. Durch den Horizontalschlitten 3 und den Hubschlitten 4 ergeben sich zwei translatorische Freiheitsgrade für die Handhabungsvorrichtung, nämlich in horizontale X-Richtung und vertikale Z-Richtung.

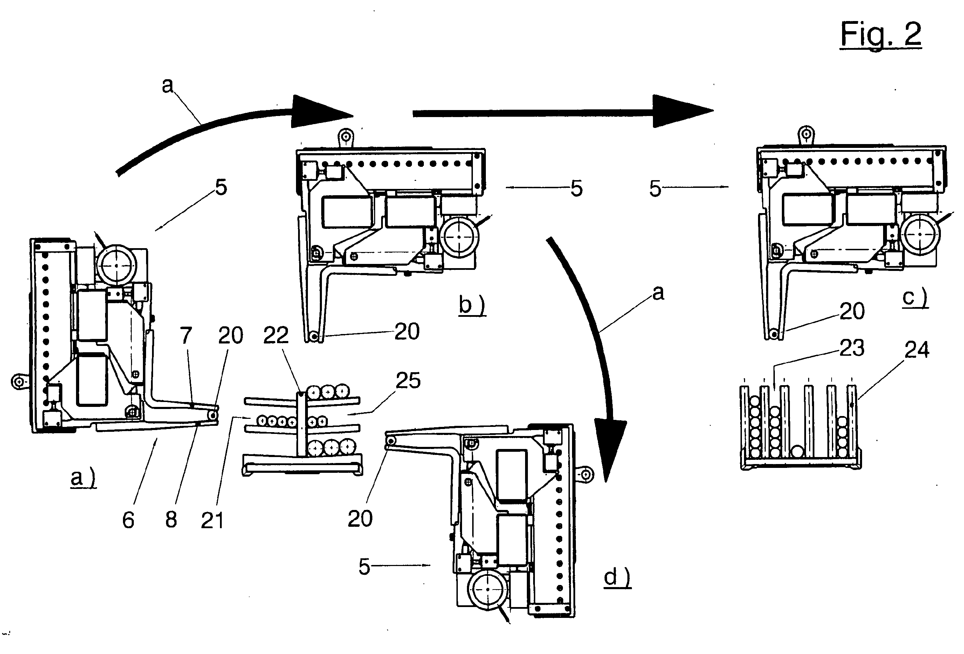

Am Hubschlitten 4 ist eine sich in Horizontalrichtung erstreckende Hubtraverse 5 vorgesehen, die näher in den Figuren 2 bis 6 dargestellt ist. Die Hubtraverse 5 weist eine Vielzahl von Lastaufnahmemitteln 6 in Form von paarweise vorgesehenen Greiferzinken 7, 8 auf, die bei der Darstellung gemäß Figur 1 zwischen sich ein stangenförmiges Material 9 einklemmen.

In Figur 1 sind auf einem Hallenboden 10 beispielhafte Kragarmkassetten bzw. Regale 11, 12, 13, 14, 15 dargestellt, in denen stangenförmiges Langgut 16 unterschiedlichen Durchmessers und unterschiedlichen Querschnitts gelagert sind und auf weitere Bearbeitung warten. Während die meisten Regale horizontale Regalfächer mit horizontalen Kragarmen 17 aufweisen, ist auf der Oberseite eines Regals 11 ein Vertikallager vorgesehen, das aus vielen vertikale Fächer 18 bildenden Vertikalarmen 19 besteht.

Es ist unschwer erkennbar, dass das dort vorhandene Stangenmaterial nicht mit herkömmlichen horizontalen Gabelzinken ein- bzw. ausgelagert werden könnte.

Figur 2 zeigt nun die Hubtraverse 5 mit den beiden exemplarischen Gabelzinken 7, 8, die zusammen ein Lastaufnahmemittel 6 bilden. Die Greiferzinken 7, 8 klemmen zwischen sich eine Stange 20 ein, die sie aus einem Horizontalfach 21 eines Horizontallagers 22 ausgelagert haben. Ausgehend von der Darstellung gemäß Figur 2a) wird nun die Lasttraverse entsprechend dem Pfeil a, der die horizontale Schwenkachse symbolisiert, um 90° im Uhrzeigersinn verschwenkt in die Position gemäß Figur 2b), bei der die Greiferzinken 7, 8, die in Figur 2a) sich im wesentlichen in Horizontalrichtung erstreckt haben, nun in vertikaler Richtung orientiert sind. Von dieser Position kann die Lasttraverse entweder weiter in die Position gemäß Figur 2c) in Horizontalrichtung verschoben werden, um dann die Stange 20 in ein Vertikalfach 23 eines Vertikallagers 24 von oben einzulagern; oder aber die Lasttraverse wird um weitere 90° im Uhrzeigersinn in die Position gemäß 2d) verschwenkt, um die Stange 20 von rechts auf der gegenüberliegenden Seite des Horizontallagers 22 in ein Horizontalfach 25 einzulagern.

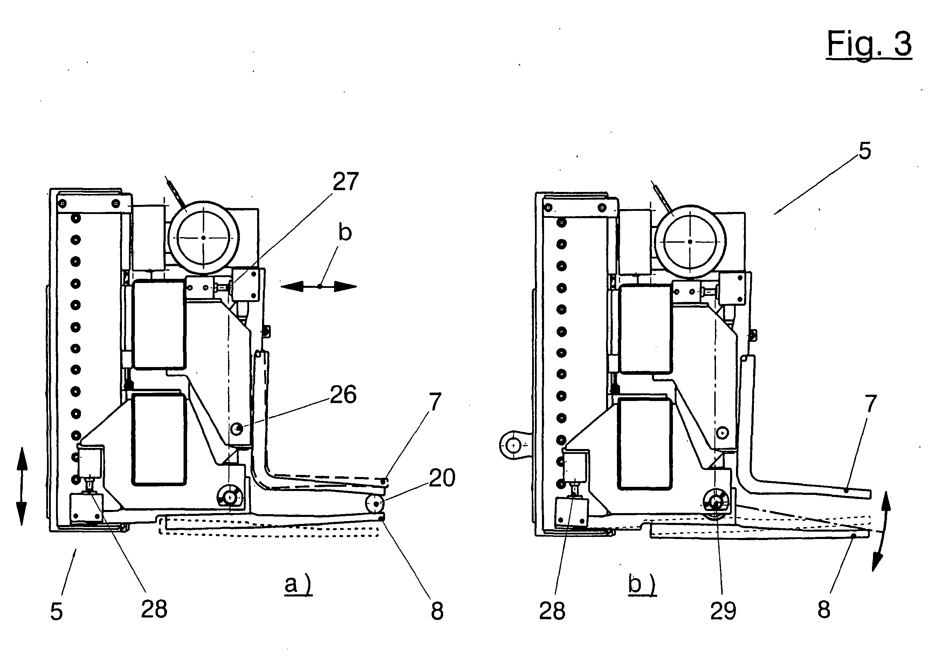

Figur 3 zeigt in Figur 3a die Greifbewegung der Greiferzinken 7, 8 von einer ursprünglich gestrichelten Position in die in durchgezogenen Linien dargestellte Position, bei der die Stange 20 von oben und unten beaufschlagt und so zwischen den beiden Greiferzinken geklemmt wird. Diese Zustellbewegung der Greiferzinken erfolgt um ein Schwenkgelenk 26, indem ein Stellantrieb 27 das freie Ende 7a des Greiferzinken 7 in Richtung des Pfeils b bewegt und so die Öffnungs- bzw. Schließbewegung des Greiferzinkenpaares bewirkt.

Gemäß Figur 3b) kann der untere Greiferzinken 8 durch einen weiteren Stellantrieb 28 um ein Schwenklager 29 nach unten weggeklappt werden, um einerseits die Greifbewegung zu unterstützen und um zum anderen dieses Greiferzinkenpaar inaktiv zu machen. Durch das Wegklappen nach unten kann verhindert werden, dass der untere Greiferzinken bei einem Umlagervorgang in Eingriff mit einem etwaig in dem Lagerfach vorhandenen Stangematerial gelangt.

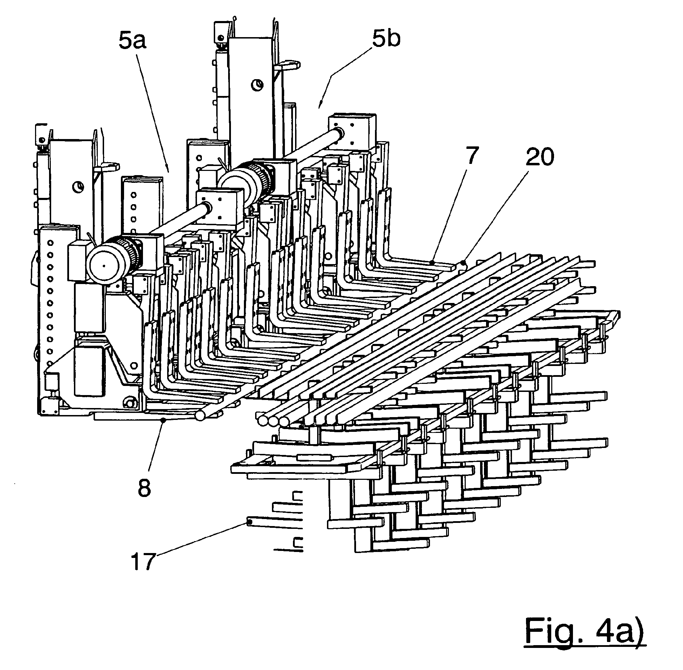

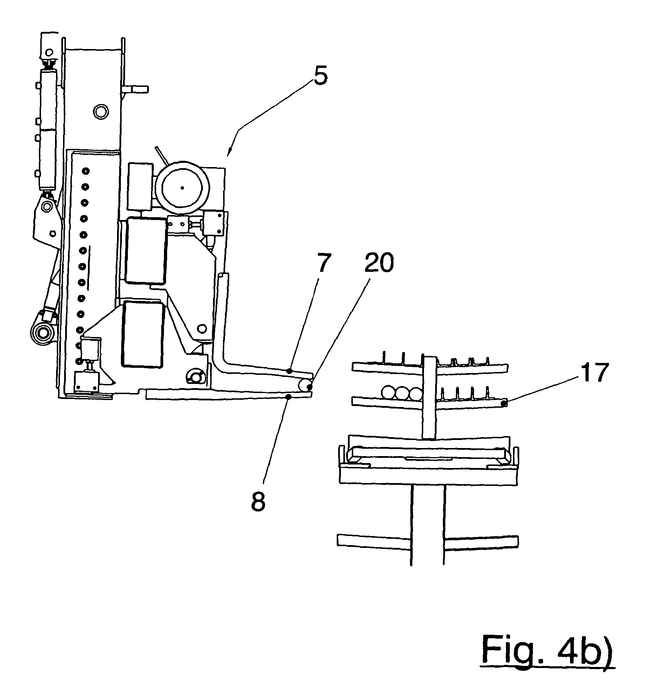

Figur 4a und Figur 4b zeigen nun die der Position gemäß Figur 2a) entsprechende Momentaufnahme beim Auslagern des stangenförmigen Materials 20. Hieraus kann man auch erkennen, dass die Horizontalarme 17 und die Greiferzinkenpaare 6 so versetzt zueinander angeordnet sind, dass sie nicht miteinander kollidieren können. Darüber hinaus sind die Greiferzinken in ihrer Dimension höchstens so dick ausgeführt wie die Horizontalarme, um in den Zwischenraum zwischen benachbarte Horizontalarme eintauchen zu können, ohne gleichzeitig ein darüber oder darunter angeordnetes stangenförmiges Material unabsichtlich zu berühren. In Figur 4a erkennt man auch, dass die Lasttraverse 5 aufgeteilt ist in zwei Traversenteile 5a und 5b, die unabhängig voneinander arbeiten können und so beispielsweise zum Umlagern von kurzem Stangenmaterial dienen.

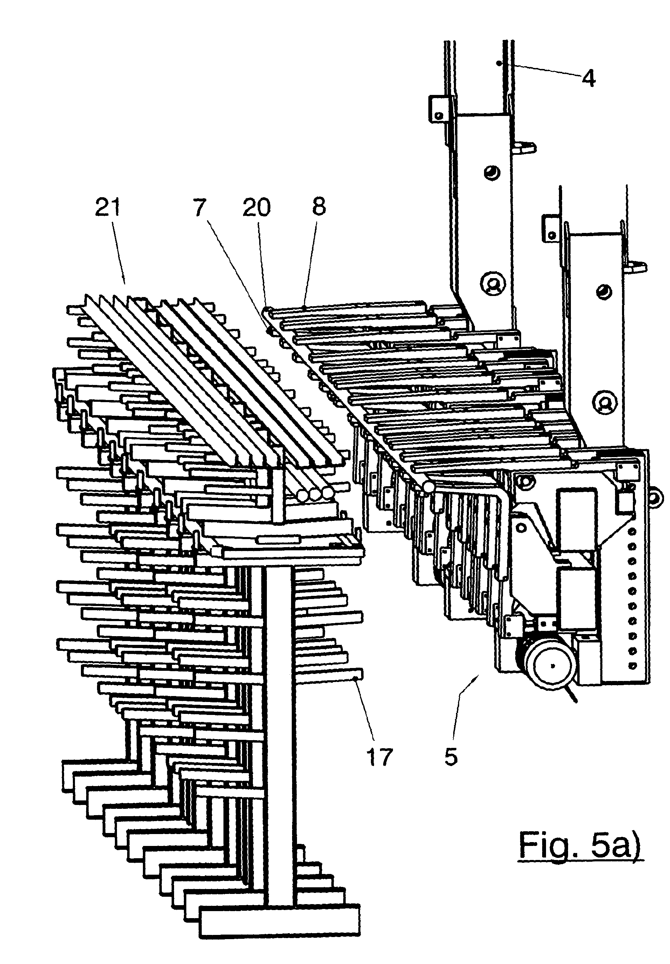

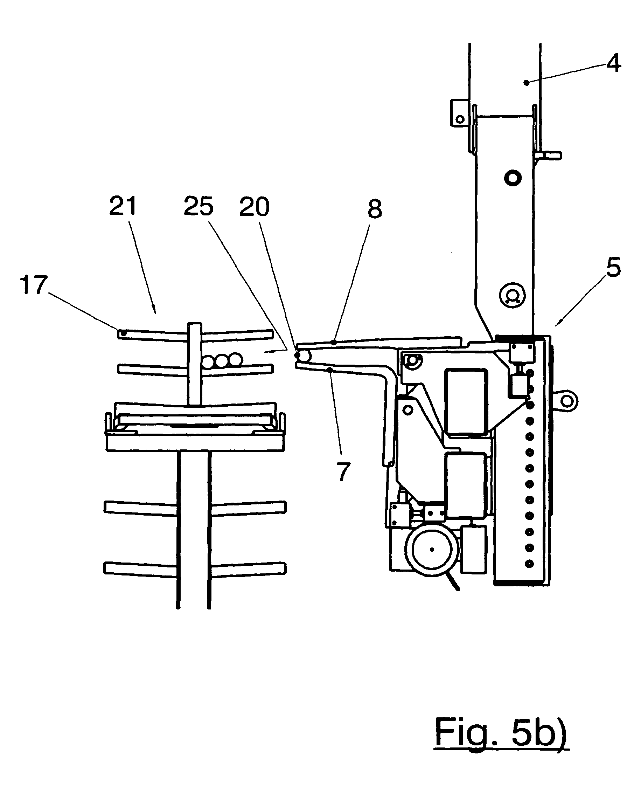

Figur 5a und 5b zeigen eine Position entsprechend Figur 2d), bei der die Lasttraverse um 180° gegenüber der Position gemäß Figur 4a und 4b verschwenkt ist, um die Stange 20 von rechts in das Horizontalfach 25 des Horizontallagers 21 einlagern zu können.

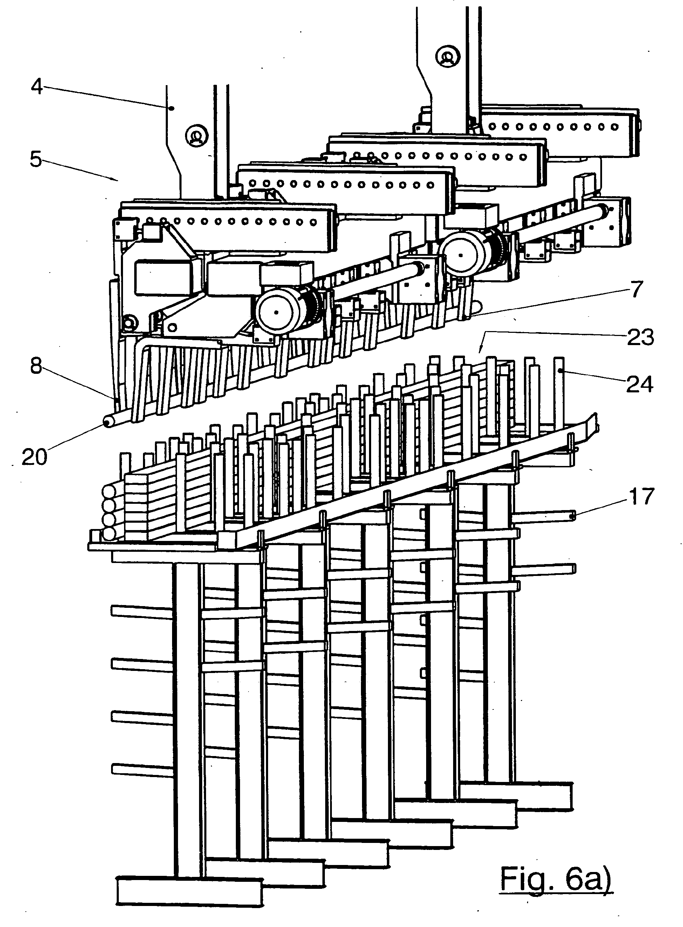

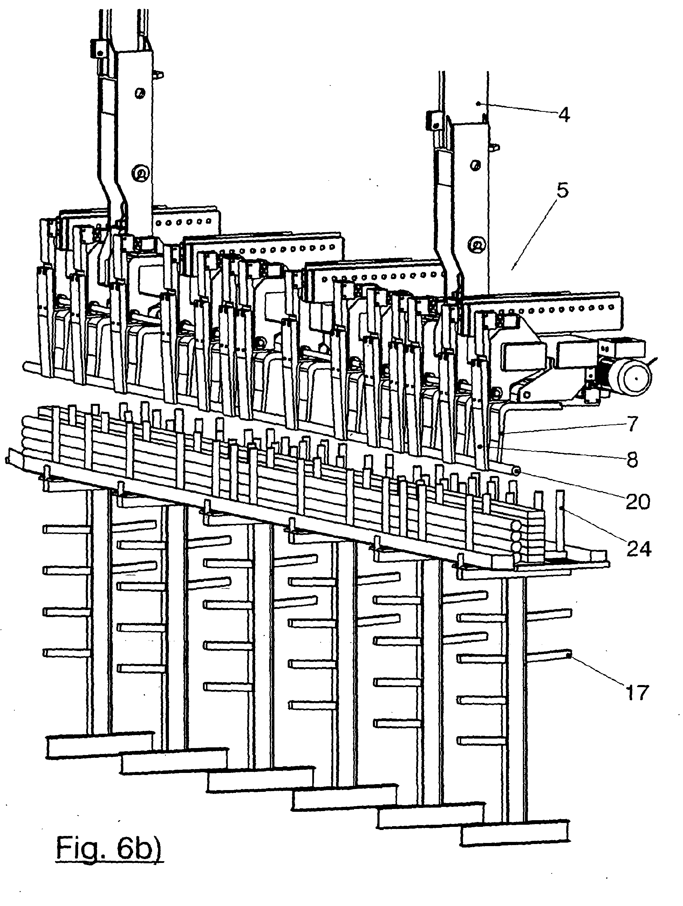

Die Figuren 6a und 6b schließlich zeigen eine der Figur 2c) entsprechende Position der Lasttraverse 5, nämlich beim vertikalen Einlagern der Stange 20 von oben in ein vertikales Lagerfach 23 des Vertikallagers 24.

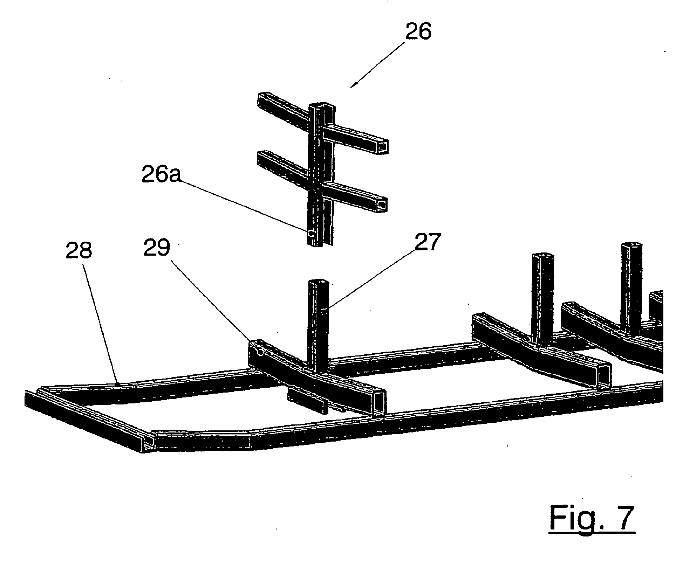

In Figur 7 ist schließlich ein nachrüstbares Kragarmfach 26 dargestellt, das über eine Steckverbindung (der vertikale Holm 26a ist hohl ausgeführt) mit einer Steckaufnahme 27 einer Kassette 28 zusammenwirkt. Im Bedarfsfall ist es somit möglich, auf der Kassette horizontale Kragarmfächer vorzusehen, die aufgrund der Lösbarkeit der Steckverbindung anschließend auch wieder entfernt werden können. Ohne diese Kragarmfächer ist das Langgut auf horizontale, die Steckaufnahme tragende Verbindungsholme 29 auflagerbar.

Zusammenfassend bietet die vorliegende Erfindung den Vorteil, mit derselben Lasttraverse sowohl Horizontal- als auch Vertikallager anfahren zu können und ermöglicht hierdurch eine größere Lager- und Materialvielfalt. Darüber hinaus wird durch die Klemmung der handzuhabenden Materialien eine Transportsicherung erreicht, die dafür ursächlich ist, dass die Transportgeschwindigkeit deutlich erhöht werden kann.

## Patentansprüche

1. Handhabungsvorrichtung für Langgut (8, 16, 20), insbesondere zum Vereinzeln und/oder vereinzelten Transportieren von stangenförmigen Material bestehend aus einer zumindest in Vertikal- und Horizontalrichtung verfahrbaren Lasttraverse (5) mit zumindest zwei auf derselben Horizontalebene nebeneinander angeordneten Lastaufnahmemitteln (6), wobei die Lastaufnahmemittel (6) jeweils aus einer Greifvorrichtung mit einem das Langgut beaufschlagenden Greiferzinkenpaar (7, 8) bestehen und die Lastaufnahmemittel zumindest mittelbar um eine horizontale Schwenkachse (a) schwenkbar gelagert sind,
**dadurch gekennzeichnet,**
**dass** die Lastaufnahmemittel (6) einzeln und getrennt voneinander betätigbar sind.

2. Handhabungsvorrichtung nach zumindest Anspruch 1,
**dadurch gekennzeichnet,**
**dass** die Lastaufnahmemittel (6) einen Schwenkbereich von zumindest 90° und insbesondere 180° aufweisen.

3. Handhabungsvorrichtung nach zumindest einem der vorstehenden Ansprüche,
**dadurch gekennzeichnet,**
**dass** die Lasttraverse (5) schwenkbar in der Handhabungsvorrichtung (1) und insbesondere an einem in Vertikalrichtung verfahrbaren Hubschlitten (4) angeordnet ist.

4. Handhabungsvorrichtung nach zumindest einem der vorstehenden Ansprüche,
**dadurch gekennzeichnet,**
**dass** die Lastaufnahmemittel (6) schwenkbar an der Lasttraverse (5) angeordnet sind.

5. Handhabungsvorrichtung nach zumindest einem der vorstehenden Ansprüche,
**dadurch gekennzeichnet,**
**dass** das Greiferzinkenpaar (7, 8) das Langgut (8, 16, 20) zwischen sich klemmt.

6. Handhabungsvorrichtung nach zumindest einem der vorstehenden Ansprüche,
**dadurch gekennzeichnet,**
**dass** die Lasttraverse (5) zumindest zweigeteilt ausgebildet ist.

7. Handhabungsvorrichtung nach zumindest Anspruch 6,
**dadurch gekennzeichnet,**
**dass** die Lastaufnahmemittel (6) der beiden Lasttraversenteile (5a, 5b) unabhängig voneinander betätigbar sind.

8. Handhabungsvorrichtung nach zumindest einem der vorstehenden Ansprüche,
**dadurch gekennzeichnet,**
**dass** die Greiferzinken (7, 8) der Lastaufnahmemittel (6) im Wesentlichen parallel zueinander angeordnet sind.

9. Handhabungsvorrichtung nach zumindest Anspruch 8,
**dadurch gekennzeichnet,**
**dass** die Greiferzinken (7, 8) zwischen einer ersten horizontalen, über eine vertikale in eine zweite horizontale Orientierung verschwenkbar sind.

10. Handhabungsvorrichtung nach zumindest Anspruch 8,
**dadurch gekennzeichnet,**
**dass** die Greiferzinken (7, 8) in vertikaler Richtung orientierbar sind, um Langgut von oben in Vertikalrichtung handzuhaben.

11. Handhabungsvorrichtung nach zumindest Anspruch 8,
**dadurch gekennzeichnet,**
**dass** die Greiferzinken (7, 8) in horizontaler Richtung orientierbar sind, um Langgut von der Seite in Horizontalrichtung handzuhaben.

12. Handhabungsvorrichtung nach zumindest einem der vorstehenden Ansprüche,
**dadurch gekennzeichnet,**
**dass** die Lasttraverse (5) eine Vielzahl von Lastaufnahmemitteln (6) aufweist.

13. Handhabungsvorrichtung nach zumindest einem der vorstehenden Ansprüche,
**dadurch gekennzeichnet,**
**dass** die Handhabungsvorrichtung (1) das Langgut (8, 16, 20) mit zumindest zwei translatorischen und einem rotatorischen Freiheitsgrad handhabt.

14. Handhabungsvorrichtung nach zumindest einem der vorstehenden Ansprüche,
**dadurch gekennzeichnet,**
**dass** die Lastaufnahmemittel (6) mit Langgut (8, 16, 20), das in in horizontaler oder vertikaler Richtung orientierten Kragarmfächern (26) gelagert ist, zusammenwirken, und dass die Kragarmfächer (26) lösbar, insbesondere über eine Steckverbindung (26a, 27) an einem Regal, einer Kassette (28) oder dergleichen festlegbar sind.

## Claims

1. Handling device for elongate objects (9, 16, 20), in particular for separating and/or individually transporting rod-shaped material, comprising a load-bearing beam (5) which is at least displaceable in the vertical and the horizontal direction and has at least two load pick-up means (6) disposed adjacent to one another in the same horizontal plane, wherein the load pick-up means (6) each comprise a gripping device with a pair of gripper prongs (7, 8) for engaging the elongate objects and the load receiving means are mounted so as to be pivotable at least indirectly about a horizontal pivot axis (a), **characterised in that** the load pick-up means (6) can be actuated individually and separately from one another.

2. Handling device as claimed in at least Claim 1, **characterised in that** the load pick-up means (6) have provided a pivoting range of at least 90° and in particular 180°.

3. Handling as claimed in at least one of the preceding claims, **characterised in that** the load-bearing beam (5) is disposed pivotably in the handling device (1) and in particular on a lifting carriage (4) which is displaceable in the vertical direction.

4. Handling device as claimed in at least one of the preceding claims, **characterised in that** the load pick-up means (6) are disposed pivotably on the load-bearing beam (5).

5. Handling device as claimed in at least one of the preceding claims, **characterised in that** the pair of gripper prongs (7, 8) clamps the elongate objects (9, 16, 20) between them.

6. Handling device as claimed in at least one of the preceding claims, **characterised in that** the load-bearing beam (5) is constructed in at least two parts.

7. Handling device as claimed in at least Claim 6, **characterised in that** the load pickup means (6) of the parts (5a, 5b) of the load-bearing beam can be actuated independently of one another.

8. Handling device as claimed in at least one of the preceding claims, **characterised in that** the gripper prongs (7, 8) of the load pick-up means (6) are disposed substantially parallel to one another.

9. Handling device as claimed in at least Claim 8, **characterised in that** the gripper prongs (7, 8) are pivotable between a first horizontal orientation through a vertical orientation and into a second horizontal orientation.

10. Handling device as claimed in at least Claim 8, **characterised in that** the gripper prongs (7, 8) can be oriented in the vertical direction in order to manipulate elongate objects in the vertical direction from above.

11. Handling device as claimed in at least Claim 8, **characterised in that** the gripper prongs (7, 8) can be oriented in the horizontal direction in order to manipulate long goods in the horizontal direction from the side.

12. Handling device as claimed in at least one of the preceding claims, **characterised in that** the load-bearing beam (5) has a plurality of load pick-up means (6).

13. Handling device as claimed in at least one of the preceding claims, **characterised in that** the handling device (1) manipulates the elongate objects (9, 16, 20) with at least two degrees of freedom in translation and one degrees of freedom in rotation.

14. Handling device as claimed in at least one of the preceding claims, **characterised in that** the load pick-up means (6) co-operate with elongate objects (9, 16, 20), which are stored in cantilever-type compartments (26) oriented in the horizontal or vertical direction, and that the cantilever-type compartments (26) can be released, and in particular can be fixed by way of a connector (26a, 27) on a shelf, a cassette (28) or the like.

## Revendications

1. Dispositif de manutention pour objets longitudinaux (9, 16, 20), notamment pour séparer les uns des autres et/ou pour transporter individuellement des objets en forme de barre, qui est composé d'un palonnier (5) déplaçable au moins dans les directions horizontale et verticale et doté d'au moins deux moyens recevant la charge (6) disposés côte à côte dans le même plan horizontal, les moyens recevant la charge (6) étant chacun constitués d'un dispositif de préhension comprenant une paire de dents de préhension (7, 8) s'emparant de l'objet longitudinal et lesdits moyens recevant la charge étant montés de manière à pouvoir pivoter au moins indirectement autour d'un axe de pivotement horizontal (a), **caractérisé en ce que** les moyens recevant la charge (6) peuvent être actionnés individuellement et séparément l'un de l'autre.

2. Dispositif de manutention selon au moins la revendication 1, **caractérisé en ce que** les moyens recevant la charge (6) présentent une amplitude de pivotement d'au moins 90° et notamment de 180°.

3. Dispositif de manutention selon au moins l'une des revendications précédentes, **caractérisé en ce que** le palonnier (5) est disposé de façon pivotante dans le dispositif de manutention (1) et notamment sur un chariot de levage (4) mobile dans la direction verticale.

4. Dispositif de manutention selon au moins l'une des revendications précédentes, **caractérisé en ce que** les moyens recevant la charge (6) sont disposés de façon pivotante sur le palonnier (5).

5. Dispositif de manutention selon au moins l'une des revendications précédentes, **caractérisé en ce que** la paire de dents de préhension (7, 8) serre l'objet longitudinal (9, 16, 20) entre elle.

6. Dispositif de manutention selon au moins l'une des revendications précédentes, **caractérisé en ce que** le palonnier (5) est au moins réalisé en deux parties.

7. Dispositif de manutention selon au moins la revendication 6, **caractérisé en ce que** les moyens recevant la charge (6) des deux parties de palonnier (5a, 5b) peuvent être actionnés indépendamment l'un de l'autre.

8. Dispositif de manutention selon au moins l'une des revendications précédentes, **caractérisé en ce que** les dents de préhension (7, 8) des moyens recevant la charge (6) sont disposées essentiellement parallèlement entre elles.

9. Dispositif de manutention selon au moins la revendication 8, **caractérisé en ce que** les dents de préhension (7, 8) peuvent pivoter d'une première orientation horizontale à une seconde orientation horizontale, en passant par une orientation verticale.

10. Dispositif de manutention selon au moins la revendication 8, **caractérisé en ce que** les dents de préhension (7, 8) peuvent être orientées verticalement, afin de manipuler un objet longitudinal dans la direction verticale par le haut.

11. Dispositif de manutention selon au moins la revendication 8, **caractérisé en ce que** les dents de préhension (7, 8) peuvent être orientées horizontalement, afin de manipuler un objet longitudinal dans la direction horizontale par le côté.

12. Dispositif de manutention selon au moins l'une des revendications précédentes, **caractérisé en ce que** le palonnier (5) présente de nombreux moyens recevant la charge (6).

13. Dispositif de manutention selon au moins l'une des revendications précédentes, **caractérisé en ce que** le dispositif de manutention (1) manipule l'objet longitudinal (9, 16, 20) avec au moins deux degrés de liberté en translation et un degré de liberté en rotation.

14. Dispositif de manutention selon au moins l'une des revendications précédentes, **caractérisé en ce que** les moyens recevant la charge (6) coopèrent avec les objets longitudinaux (9, 16, 20) placés dans des consoles (26) orientées horizontalement ou verticalement, et **en ce que** les consoles (26) peuvent être fixées de façon amovible, notamment par le biais d'une liaison par enclenchement (26a, 27), à une étagère, une cassette (28) ou analogue.
